# EUROPEAN PATENT SPECIFICATION

(11) **EP 1 819 193 B1**
(45) Date of publication and mention of the grant of the patent: **22.06.2011**
(21) Application number: 07102057.2
(22) Date of filing: 09.02.2007
(51) Int. Cl.: H04R 9/00, H04M 1/03

(54) **Electroacoustic transducing device**
Elektroakustischer Wandler
Dispositif transducteur électroacoustique

(30) Priority: 13.02.2006 JP 2006034795
(43) Date of publication of application: 15.08.2007
(73) Proprietor: Hosiden Corporation, Osaka (JP)
(72) Inventor: Suzuki, Masahide, Yao-shi, Osaka (JP)
(74) Representative: Fleuchaus, Michael A.

(56) References cited:
- WO-A2-2004/064037
- JP-A- 2005 033 723
- US-A1- 2002 052 216
- US-B1- 6 324 284

## Description

### Background of the Invention

### Field of the Invention

The present invention relates to an electroacoustic transducing device such as a speaker or a sounding member which is useful in a portable electronic apparatus such as a portable telephone or a digital camera, and more particularly to an electroacoustic transducing device which is to be incorporated in a case of a portable electronic apparatus, and which emits a sound generated by an electroacoustic transducer to the outside through a sound hole disposed in a side face of the case and situated on a lateral side of the electroacoustic transducer.

### Description of the Prior Art

As the prior art, a speaker for a portable telephone is disclosed in Japanese Patent Application Laying-Open Nos. 2002-344602 and 2005-109949. The speaker disclosed in Japanese Patent Application Laying-Open No. 2002-344602 is of the front emission type in which a sound hole is disposed in the front face of the speaker, and emits a sound generated from the front sound hole of the speaker, to the outside through a sound hole disposed in a side face of the case of the portable telephone and situated on a lateral side of the speaker. The speaker disclosed in Japanese Patent Application Laying-Open No. 2005-109949 is of the side emission type in which a sound hole is disposed in the side face of the speaker, and emits a sound generated from the side sound hole of the speaker, to the outside through a sound hole disposed in a side face of a case of the portable telephone and situated on a lateral side of the speaker.

As closest prior art, the document JP2005033723 can be cited, which discloses an electroacoustic transducing device in which a sound generated by an electroacoustic transducer to be incorporated in a case of a portable electronic apparatus is emitted to the outside through a sound hole. The electroacoustic transducing device comprises sound holes which are disposed in the front face of said electroacoustic transducer and further comprises an annular rib that forms a sound duct tube which straddles from a speaker inside the case to the front face of the transducer where the front sound hole is disposed.

### Summary of the Invention

In the prior art, a sound hole is disposed only in the front or side face of an electroacoustic transducer, and a sound generated from the front or side sound hole is emitted to the outside from a sound hole disposed in a side face of a case of a portable electronic apparatus and situated on a lateral side of the electroacoustic transducer. However, the sound pressure is not always sufficiently high.

In the front emission type, a space for guiding a sound emitted from the front sound hole of the electroacoustic transducer to the sound hole disposed in the side face of the portable electronic apparatus is formed between the electroacoustic transducer and the inner face of the case of the portable electronic apparatus. The displacement volume of air (sound) caused by vibration of a diaphragm is increased by the space. However, an opening area of an air discharging hole (an end portion of the space) which is sufficiently large with respect to the opening area of the front sound hole cannot be ensured. The reduced air displacement efficiency causes the acoustic resistance which impedes vibration of the diaphragm, to be increased, and the sound pressure to be lowered. The opening area of the air discharging hole may be increased by increasing the height of the space. However, the increase directly results in impairment of thinning of the portable electronic apparatus. Therefore, the sound pressure cannot be easily improved.

By contrast, in the side emission type, only a small space for guiding a sound emitted from the side sound hole of the electroacoustic transducer to the sound hole disposed in the side face of the portable electronic apparatus is formed between the electroacoustic transducer and the inner face of the case of the portable electronic apparatus. The displacement volume of air caused by vibration of a diaphragm is substantially restricted to that in the electroacoustic transducer itself, and therefore small. Furthermore, an opening area of an air discharging hole (the side sound hole) is small. The reduced air displacement efficiency causes the acoustic resistance which impedes vibration of the diaphragm, to be increased, and the sound pressure to be lowered. The displacement volume of air and the opening area of the air discharging hole may be increased by increasing the thickness of the electroacoustic transducer itself. Also in this case, however, the increase directly results in impairment of thinning of the portable electronic apparatus. Therefore, the sound pressure cannot be easily improved.

The invention provides an electroacoustic transducing device in which a sound generated by an electroacoustic transducer to be incorporated in a case of a portable electronic apparatus is emitted through a sound hole disposed in a side face of the case and situated on a lateral side of the electroacoustic transducer. The electroacoustic transducing device comprises: sound holes which are disposed in front and side faces of the electroacoustic transducer, respectively; and an annular pad which straddles from the front face of the electroacoustic transducer where the front sound hole is disposed, to the side face of the electroacoustic transducer where the side sound hole is disposed, so as to collectively surround the front and side sound holes. The pad butts against an inner face of the case, thereby forming a space for guiding a sound which has passed through the front sound hole, along the inner face of the case toward the side sound hole, causing the sound to merge into a sound which has passed through the side sound hole, in the vicinity of the side sound hole, and then guiding a resulting sound to the sound hole disposed in the side face of the case. Since sound holes are disposed in the front and side faces of the electroacoustic transducer, both the space volume which is possessed by the electroacoustic transducer itself and inside the electroacoustic transducer, and that which is formed between the electroacoustic transducer and the inner face of the case of the portable electronic apparatus, and outside the electroacoustic transducer can be used as a displacement volume of air (sound) caused by vibration of a diaphragm. Furthermore, the opening area of the side sound hole (air discharging hole) is made large, which is equal to a total of sectional areas of the space inside the electroacoustic transducer, and that outside the electroacoustic transducer. Therefore, the acoustic resistance which affects vibration of the diaphragm is reduced, and the diaphragm can easily vibrate. Even when the same driving power is applied, the sound pressure of the electroacoustic transducer is improved as compared with the prior art. Accordingly, without increasing the space for incorporating the electroacoustic transducer and the thickness of the transducer itself, the sound pressure of the electroacoustic transducer can be improved, and a sufficient sound pressure can be obtained.

### Brief Description of the Drawings

Fig. 1 is a front view of a speaker of an embodiment of the invention.
Fig. 2 is an exploded perspective view of the speaker of Fig. 1.
Fig. 3 is a sectional view taken along the line A-A of Fig. 1.
Fig. 4 is a graph showing a simulation example.
Fig. 5 is a sectional view of a speaker apparatus of the front emission type (comparative example 1).
Fig. 6 is a sectional view of a speaker apparatus of the side emission type (comparative example 2).

### Detailed Description of the Preferred Embodiment

Hereinafter, an embodiment of the electroacoustic transducing device of the invention will be described with reference to the accompanying drawings.

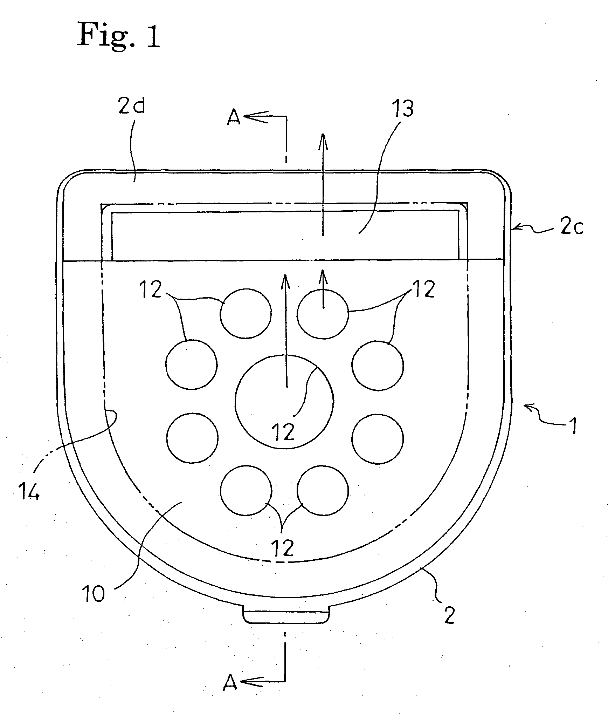

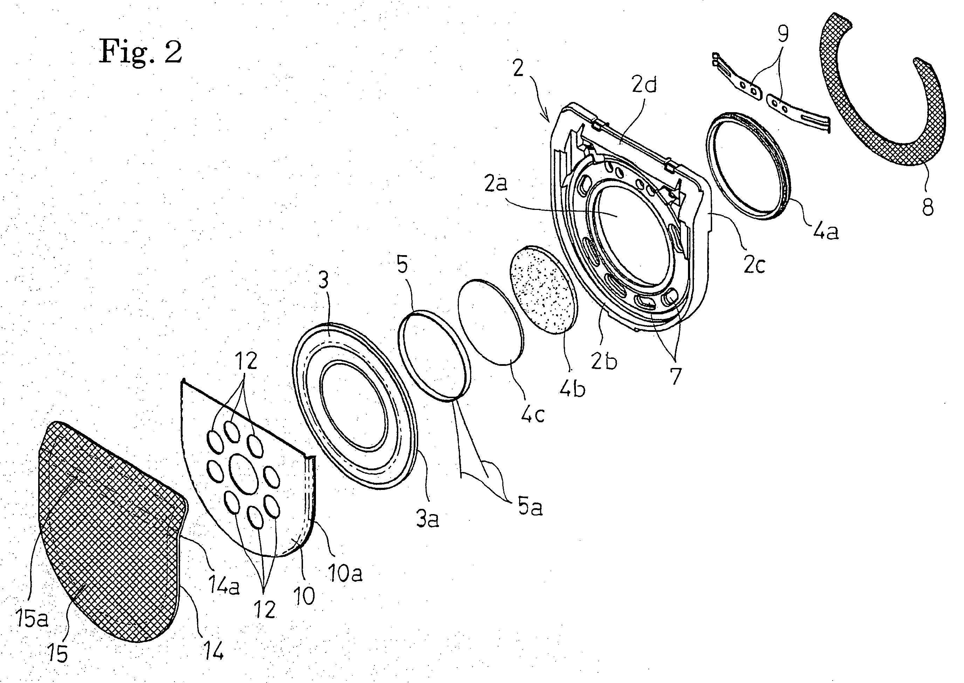

As shown in Figs. 1 to 3, a speaker 1 comprises a frame 2, a circular diaphragm 3, a magnetic circuit 4 of the internal magnet type, and a voice coil 5. The frame 2 is made of a resin material, and has a semicylindrical external shape in which one side of a rectangle is raised into a semicircular shape. The diaphragm 3 is formed by a thin film of a resin or a metal, and placed in the front side of the frame 2 so that the peripheral edge is fixed to the frame 2 via a circular frame member 3a. The magnetic circuit 4 comprises a bottomed cylindrical yoke 4a, a columnar magnet 4b, and a disk-like pole piece 4c. The yoke 4a is made of a magnetic material, fitted into a circular through hole 2a disposed in a substantially middle portion of the frame 2, and fixed by ultrasonic welding. The magnet 4b is secured to an inner bottom portion of the yoke 4a. The pole piece 4c is made of a magnetic material, and secured to an end face of the magnet 4b. One end of the voice coil 5 is secured to the rear face of the diaphragm 3, and the other end side is placed in a magnetic gap 4d between the yoke 4a of the magnetic circuit 4 and the pole piece 4c. The voice coil 5 is caused to vibrate along the axis by a speaker driving force which is generated by flowing an AC current (sound signal) through the voice coil 5. In accordance with this, the diaphragm 3 vibrates to generate a sound. Namely, the speaker 1 is configured as a dynamic type one.

In the frame 2, plural back sound holes 7 are formed by through holes for emitting a sound (for discharging air) to the back side of the speaker 1 from a back air chamber 6 formed between the diaphragm 3 and the frame 2, in accordance with vibration of the diaphragm 3. A nylon-made compensation cloth 8 which is used for integrally closing the back sound holes 7, which has a mesh-like shape, and which is provided with air and sound permeabilities is applied to the back face of the frame 2 by thermal bonding.

The frame 2 is molded integrally with a pair of terminals (not shown) by insert molding. The pair of terminals are embedded respectively in right and left side portions of the rear end side (the upper end side in Fig. 1) of the frame 2 which is opposite to the front end (the lower end portion in Fig. 1) raised into a semicircular shape. Contact portions of the terminals are exposed from the front and back faces of the frame 2, respectively. Two lead wires 5a which are drawn out from the voice coil 5 are connected by spot welding or soldering to planar contact portions of the terminals which are exposed from both side portions of the front-face rear end side of the frame 2. A pair of contact spring pieces 9 which are to be elastically contacted with terminals of a circuit board of a portable electronic apparatus that will be described later are connected by caulking and soldering to pin-like contact portions of the terminals which are exposed from both side portions of the back-face rear end side of the frame 2, thereby obtaining a sound signal.

In the frame 2, in the front side, a side wall 2b up-stands from a U-like peripheral side edge which consists of a semicircular front side edge, and right and left side edges continuous to the both ends of the front side edge, and two faces or front and rear face sides are opened.

A baffle (protector) 10 which covers the diaphragm 3 to protect it is disposed on the front side of the speaker 1. The baffle 10 is formed by a metal plate, and has a semicylindrical external shape in which one side of a rectangle is raised into a semicircular shape, and which is slightly smaller than the frame 2. In the baffle 10, in back side, a side wall 10a hangs from a U-like peripheral side edge which consists of a semicircular front side edge, and right and left side edges continuous to the both ends of the front side edge, and two faces or back and rear side faces are opened.

The side wall 10a of the baffle 10 is fitted from the front side of the frame 2 to the inside of the side wall 2b, whereby the side wall 10a of the baffle 10 is buttingly supported by the peripheral edge (frame member 3a) of the diaphragm 3, and the baffle 10 (specifically, the flat principal surface of the baffle 10) is supported at a substantially same height as the side wall 2b of the frame 2, on the front side of the diaphragm 3, so that a function of protecting the diaphragm 3 is performed, and the flat front face of the speaker 1 is configured. The fixation of the baffle 10 is performed by an adhesive agent between the side wall 10a of the baffle 10 and the side wall 2b of the frame 2.

Plural front sound holes 12 which are formed by through holes, and which emit a sound (for discharging air) to the front side of the speaker 1 from an internal front air chamber 11 formed between the diaphragm 3 and the baffle 10, in accordance with vibration of the diaphragm 3 are disposed in the baffle 10 which configures the front of the speaker 1.

The frame 2 and the baffle 10 are fitted to each other to configure a semicylindrical speaker case which is opened in the rear side face, and form the external shape of the speaker 1. As a result, a side sound hole 13 for emitting a sound (for discharging air) to the rear side direction of the speaker 1 from the internal front air chamber 11 in accordance with vibration of the diaphragm 3 is disposed in the rear side face of the speaker 1 between the diaphragm 3 and the baffle 10.

A pad 14 is disposed on the front and rear side faces of the speaker 1 so as to straddle over these two faces. The pad 14 is formed by shaping a well known cushion material such as a PORON material which is a closed-cell foam, into an annular shape having a constant width and thickness. The pad has a bent portion 14a so as to extend along the front and rear side faces of the speaker 1. A U-like portion which is on one side with respect to the bent portion 14a is applied to a front peripheral edge portion of the baffle 10 so as to extend along the U-like peripheral side edge which consists of the semicircular front side edge of the baffle 10 and the right and left side edges continuous to the both ends of the front side edge. A U-like portion which is on the other side with respect to the bent portion 14a is applied to the U-like rear end face which consists of the rear end face of a main portion of the frame 2 and the both rear end faces of the side wall 2b, and which is opened to the front face side of the speaker 1. A peripheral side wall which collectively surrounds the front sound holes 12 and the side sound hole 13 is formed by the pad 14 around the two faces or the front and rear side faces of the speaker 1 so as to straddle over the two faces. The bonding of the pad 14 is performed by an adhesive agent or a double-sided adhesive tape.

A nylon-made compensation cloth 15 which straddles over the front and rear side faces of the speaker 1 to cover the two faces, which has a mesh-like shape, and which is provided with air and sound permeabilities is disposed on the front and rear side faces. The compensation cloth 15 has a bent portion 15a so as to extend along the side face of the pad 14 opposite to the face bonded to the speaker 1, and the peripheral edge portion is applied by an adhesive agent or a double-sided adhesive tape to the side face of the pad 14 opposite to the face bonded to the speaker 1, so that the cloth straddles over the two faces or the front and rear side faces of the speaker 1 and is bonded to the periphery of the faces via the pad 14. The pad 14 and the compensation cloth 15 are previously bonded together by an adhesive agent or a double-sided adhesive tape to be configured as one component.

The bending angle of the rear side face of the speaker 1 in which the side sound hole 13 is disposed, and to which a part of the pad 14 is applied, with respect to the front face of the speaker 1 in which the front sound holes 12 are disposed, and to which a part of the pad 14 is applied is set so as to form an inclination face that is smaller than 90 deg. A rear end portion of the frame 2 is projected more rearward than the rear end of the baffle 10, and a projected portion 2c is formed by cutting along a cut face which is bent by an angle that is smaller than 90 deg. with respect to the baffle 10, into a shape where the height (thickness) in a side view is further reduced as more advancing toward the tip end, whereby the rear side face of the speaker 1 is formed into an inclination face. Therefore, the opening area of the side sound hole 13 is increased (as compared with a side sound hole which is disposed in a rear side face of the speaker 1 that is perpendicular to the flat front face of the speaker 1). In the bonding of the pad 14 to the bent face (the front and rear side faces of the speaker 1), the bonding work can be easily performed, and the pad can be surely applied without forming a gap at the edge portion. As the bending angle of the rear side face of the speaker 1 with respect to the front face of the speaker 1 is smaller, the longitudinal length of the speaker 1 is further prolonged. In consideration of this, preferably, the bending angle is about 35 to 45 deg.

The U-like rear end face which is in the rear side face of the speaker 1, which consists of the rear end face of the main portion of the frame 2 and the both rear end faces of the side wall 2b, and which is opened to the front face side of the speaker 1, i.e., an application face 2d which is on the other side with respect to the bent portion 14a of the pad 14 is formed so that the width of the sides is substantially equal to that of the pad 14.

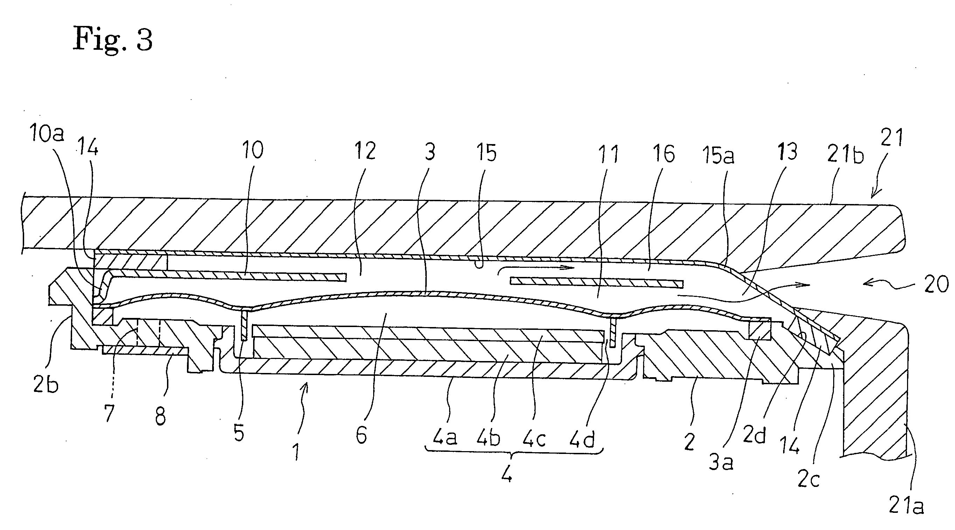

The thus configured speaker 1 is used as a speaker in which, as shown in Fig. 3, a sound hole 20 for emitting a ringing tone, a ringing melody, and the like is disposed in a case side face 21a on the tip end side (the side opposite to a coupling portion with an operating unit case having a substantially rectangular parallelepiped shape) of a displaying unit case 21 having a substantially rectangular parallelepiped shape, and in the vicinity of an edge between the side face and a case main face 21b on a display screen side of the displaying unit case 21, and which sounds a ringing tone or ringing melody of a foldable portable telephone. This is an example of an electroacoustic transducing device which emits a sound generated by an electroacoustic transducer incorporated in a case of a portable electronic apparatus, to the outside through a sound hole disposed in a side face of the case and situated on a lateral side of the electroacoustic transducer. The foldable portable telephone, the displaying unit case 21, the case side face 21a, and the sound hole 20 correspond to the portable electronic apparatus, the portable electronic apparatus case, the case side face, and the sound hole, respectively.

As shown in Fig. 3, therefore, the speaker 1 is fixed by using fixing means which is not shown, to a position which is in the displaying unit case 21 of the foldable portable telephone, and which is immediately before the sound hole 20.

In this case, the speaker 1 is fixed in the displaying unit case 21 while it butts against the inner face of the case main face 21b via the pad 14 and compensation cloth 15 which are in the front face of the speaker 1, and butts against the inner face of the case side face 21a which is in the periphery of the sound hole 20, via the pad 14 and compensation cloth 15 which are in the rear side face of the speaker 1.

In this case, the pad 14 is compressed by about 20% as compared with the thickness in the free state, whereby the speaker 1 is fixed to the inside of the displaying unit case 21 so that a gap is not formed between the front and rear side faces of the speaker 1, and the inner faces of the case main face 21b and the case side face 21a, and a space which, in the front side of the speaker 1, communicates with the internal front air chamber 11 through the front sound holes 12, which, in the rear side face side of the speaker 1, merges into the side sound hole 13, and which communicates with the internal front air chamber 11 and the sound hole 20 of the case side face 21a through the side sound hole 13, i.e., an external air chamber 16 is formed between the front and rear side faces of the speaker 1, and the inner faces of the case main face 21b and the case side face 21a.

In this case, furthermore, the speaker 1 is electrically connected to the terminals of the circuit board placed in the displaying unit case 21, via the pair of contact spring pieces 9 which are disposed on the back face of the speaker 1.

As described above, the speaker 1 which is mounted in the foldable portable telephone is combined with the displaying unit case 21. Therefore, a sound (a ringing tone or a ringing melody) which has passed through the front sound holes 12 of the speaker 1 as a result of driving of the speaker 1 enters the external air chamber 16 on the front side of the speaker 1, propagates in the direction (rear side direction) to the side sound hole 13 of the speaker 1 along the inner face of the case main face 21b, and, in the vicinity of the side sound hole 13 of the speaker 1, merges into a sound which has passed through the side sound hole 13 of the speaker 1 in the vicinity of the side sound hole 13 of the speaker 1. Thereafter, the resulting sound is emitted to the outside from the sound hole 20 disposed in the case side face 21a.

The space extending from the front side of the diaphragm 3 to the side sound hole 13 is a displacement volume of air (sound) caused by vibration of the diaphragm 3, and the side sound hole 13 is a discharging hole for the air (sound). As the displacement volume and the opening area of the side sound hole 13 are smaller, the acoustic resistance (internal pressure) which affects vibration of the diaphragm 3 is made higher, so that the diaphragm 3 hardly vibrates and this causes the sound pressure to be lowered. In the speaker 1, however, the sound holes 12, 13 are disposed in the front and side faces, respectively. Therefore, both the volume of the space (the front air chamber 11) which is possessed by the speaker 1 itself and inside the speaker 1, and that of the pace (the external air chamber 16) which is formed between the speaker 1 and the inner face of the case main face 21b, and outside the speaker 1 are used as a displacement volume of air (sound) caused by vibration of the diaphragm 3. Furthermore, the opening area of the side sound hole 13 is made large, which is equal to a total of the sectional areas of the space (the front air chamber 11) inside the speaker 1, and the space (the external air chamber 16) outside the speaker 1. Therefore, the acoustic resistance which affects vibration of the diaphragm 3 is reduced, and the diaphragm 3 can easily vibrate. Even when the same driving power is applied, the sound pressure of the speaker 1 is improved as compared with the prior art. This is confirmed by performing simulation.

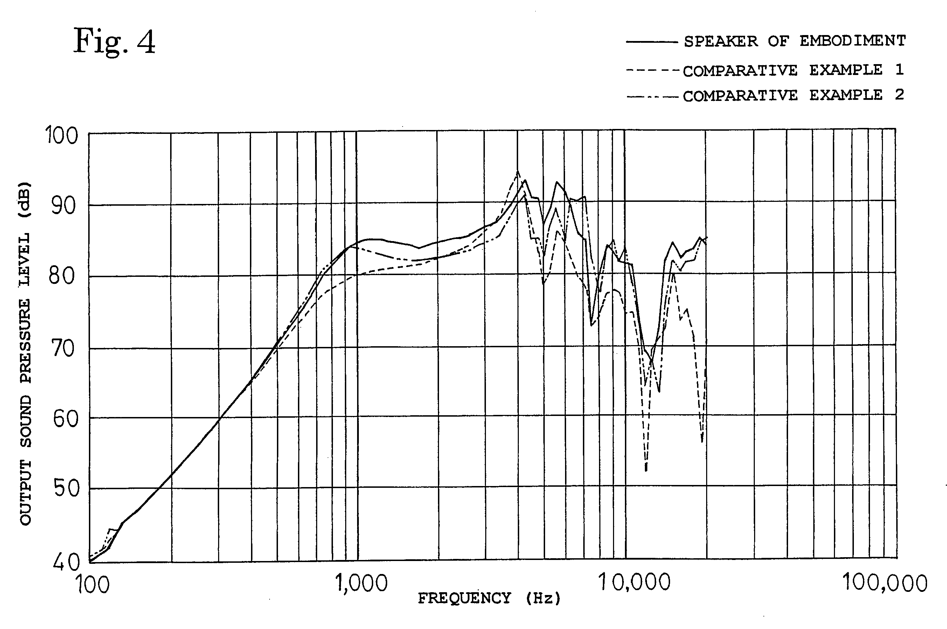

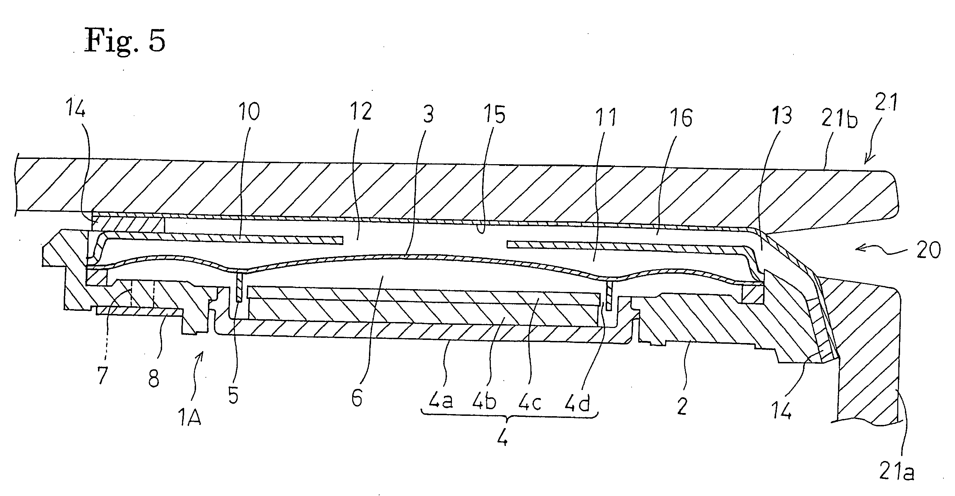

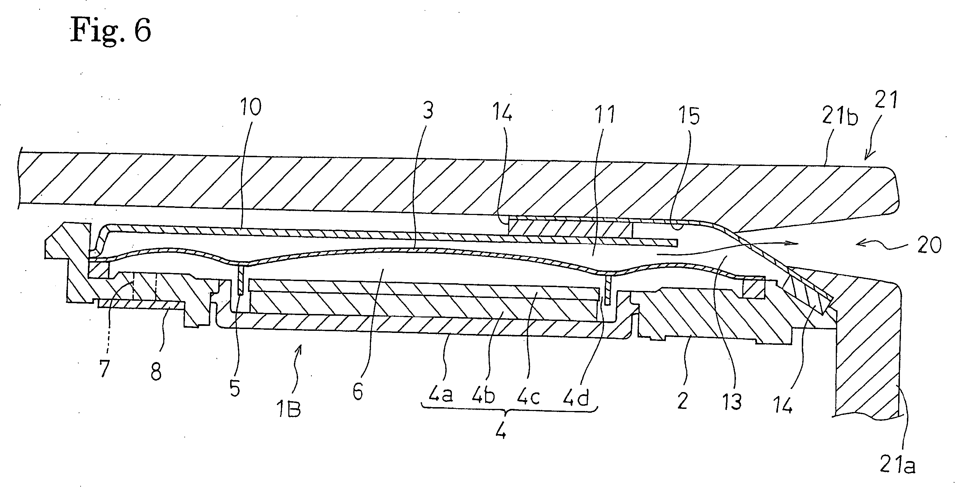

The graph of an simulation example shown in Fig. 4 shows frequency-sound pressure characteristics (input: 0.4 W, measurement distance: 10 cm) of: the speaker apparatus of the embodiment in which the sound holes 12, 13 are disposed in the front and side faces of the speaker 1; a speaker apparatus of the front emission type (comparative example 1) which is a comparative target, and in which the sound holes 12 are disposed only in the front face of a speaker 1A shown in Fig. 5; and a speaker apparatus of the side emission type (comparative example 2), and in which the sound hole 13 is disposed only in the side face of a speaker 1B shown in Fig. 6. In the speaker apparatuses of comparative examples 1 and 2, the displacement volume of air (sound) and the opening area of the side sound hole (air discharging hole) 13 are small as compared with the speaker apparatus of the embodiment (see the paragraph of

### Summary of the Invention).

As a result of the simulation, it is known that, in the speaker apparatus of the embodiment, a sound pressure level which is higher than the levels in comparative examples 1 and 2 is obtained in the frequency band of 1.0 to 1.3 kHz. From this, it can be confirmed that the sound pressure is improved by disposing the sound holes 12, 13 in the front and side faces of the speaker 1 to increase both the displacement volume of air (sound) and the opening area of the side sound hole (air discharging hole) 13.

As described above, according to the speaker apparatus of the embodiment, without increasing the space for incorporating the speaker 1 and the thickness of the speaker, the sound pressure of the speaker 1 can be improved, and a sufficient sound pressure can be obtained.

In the speaker apparatus of the embodiment, the bending angle of the rear side face of the speaker 1 in which the side sound hole 13 is disposed, with respect to the flat front face of the speaker 1 in which the front sound holes 12 are disposed is set so as to form an inclination face that is smaller than 90 deg., whereby the opening area of the side sound hole 13 is increased (as compared with a side sound hole which is disposed in a rear side face of the speaker 1 that is perpendicular to the flat front face of the speaker 1). Therefore, the configuration can contribute to improvement of the sound pressure of the speaker 1. The work of bonding the pad 14 to the front and rear side faces of the speaker 1 can be easily performed, and the pad can be surely applied without forming a gap at the edge portion. The butting of the pad 14 against the inner face of the case main face 21b and that of the case side face 21a can be performed surely and easily without forming a gap at the edge portion. Therefore, the work of incorporating (mounting) the speaker 1 into the displaying unit case 21 of the foldable portable telephone can be easily performed, and can be surely performed without causing leakage of sound from the external air chamber 16, and the like.

## Claims

1. An electroacoustic transducing device with a case in which a sound generated by an electroacoustic transducer (1) to be incorporated in the case (21) of a portable electronic apparatus is emitted to the outside through a sound hole (20) disposed in a side face (21a) of said case and situated on a lateral side of said electroacoustic transducer (1), wherein
said electroacoustic transducing device comprises:
sound holes (12, 13) which are disposed in front and side faces of said electroacoustic transducer (1), respectively; and
an annular pad (14) which is adapted to straddle from said front face of said electroacoustic transducer (1) where said front sound hole (12) is disposed, to said side face of said electroacoustic transducer (1) where said side sound hole (13) is disposed, so as to collectively surround said front and side sound holes (12, 13), and
said pad (14) is adapted to butt against an inner face of said case 21), thereby forming a space (16) for guiding a sound which has passed through said front sound hole (12), along said inner face of said case (21) toward said side sound hole (13), causing the sound to merge into a sound which has passed through said side sound hole (13), in a vicinity of said side sound hole (13), and then guiding a resulting sound to said sound hole (20) disposed in said side face (21a) of said case.

2. An electroacoustic transducing device according to claim 1, wherein
a yoke (4a) constituting a magnetic circuit (4), and a frame (2) which supports a periphery of a diaphragm (3) configured by a thin film are disposed on a back face side of said electroacoustic transducer (1),
a baffle (10) configured by a metal plate which protects said diaphragm (3) is disposed on a front side of said electroacoustic transducer (1),
said front sound hole (12) is disposed in said baffle (10) on the front side of said diaphragm (3), and
said side sound hole (13) is disposed in a side face of said electroacoustic transducer (1) between said diaphragm (3) and said baffle (10).

3. An electroacoustic transducing device according to claim 1 or 2, wherein
a bending angle of said side face of said electroacoustic transducer (1) in which said side sound hole (13) is disposed, with respect to said flat front face of said electroacoustic transducer (1) in which said front sound hole (12) is disposed is set so as to form an inclination face that is smaller than 90 deg.

4. An electroacoustic transducing device according to any one of claims 1 to 3, wherein
said pad (14) is made of a cushion material.

## Patentansprüche

1. Elektroakustische Wandlervorrichtung mit einem Gehäuse, in der ein Ton, der durch einen in das Gehäuse (21) einer tragbaren elektronischen Vorrichtung aufzunehmenden elektroakustischen Wandler (1) erzeugt ist, durch ein Tonloch (20) nach außen ausgesendet wird, das in einer Seitenfläche (21a) des Gehäuses angeordnet ist und sich an einer lateralen Seite des elektroakustischen Wandlers (1) befindet, wobei die elektroakustische Wandlervorrichtung umfasst:
Tonlöcher (12, 13), die in Vorder- beziehungsweise Seitenflächen des elektroakustischen Wandlers (1) angeordnet sind; und
eine ringförmige Auflage (14), die dazu angepasst ist, sich von der Vorderfläche des elektroakustischen Wandlers (1), wo das vordere Tonloch (12) angeordnet ist, zu der Seitenfläche des elektroakustischen Wandlers (1), wo das seitliche Tonloch (13) angeordnet ist, zu erstrecken, um die vorderen und seitlichen Tonlöcher (12, 13) gemeinsam zu umgeben, und
die Auflage (14) dazu angepasst ist, gegen eine Innenfläche des Gehäuses (21) anzuliegen, wodurch ein Raum (16) gebildet wird, um einen Ton, der durch das vordere Tonloch (12) gelangt ist, entlang der Innenfläche des Gehäuses (21) zu dem seitlichen Tonloch (13) zu führen, wodurch bewirkt wird, dass der Ton sich in einer Umgebung des Tonlochs (13) in einen Ton mischt, der durch das seitliche Tonloch (13) gelangt ist, und einen entstehenden Ton dann zu dem Tonloch (20) zu führen, das in der Seitenfläche (21a) des Gehäuses angeordnet ist.

2. Elektroakustische Wandlervorrichtung gemäß Anspruch 1, wobei
ein Joch (4a), das einen magnetischen Kreis (4) bildet, und ein Rahmen (2), der einen Umfang einer durch einen dünnen Film ausgebildeten Membran (3) stützt, an einer Rückflächenseite des elektroakustischen Wandlers (1) angeordnet sind,
eine Schallwand (10), die durch eine Metallplatte ausgebildet ist, welche die Membran (3) schützt, an einer Vorderseite des elektroakustischen Wandlers (1) angeordnet ist,
das vordere Tonloch (12) in der Schallwand (10) an der Vorderseite der Membran (3) angeordnet ist und
das seitliche Tonloch (13) in einer Seitenfläche des elektroakustischen Wandlers (1) zwischen der Membran (3) und der Schallwand (10) angeordnet ist.

3. Elektroakustische Wandlervorrichtung gemäß Anspruch 1 oder 2, wobei ein Biegewinkel der Seitenfläche des elektroakustischen Wandlers (1), in der das Tonloch (13) angeordnet ist, mit Bezug auf die flache Vorderfläche des elektroakustischen Wandlers (1), in der das vordere Tonloch (12) angeordnet ist, dazu eingestellt ist, eine Neigungsfläche von weniger als 90 Grad zu bilden.

4. Elektroakustische Wandlervorrichtung gemäß einem der Ansprüche 1 bis 3, wobei die Auflage (14) aus einem Polstermaterial hergestellt ist.

## Revendications

1. Un dispositif transducteur électroacoustique avec un logement dans lequel un son généré par un transducteur électroacoustique (1) à incorporer dans le logement (21) d'un appareil électronique portatif est émis vers l'extérieur à travers une ouverture (20) disposée dans une surface latérale (21a) dudit logement et située sur un côté latéral dudit transducteur électroacoustique (1) où
ledit dispositif transducteur électroacoustique comprend :
des ouvertures (12,13) qui sont disposées dans les surfaces latérale et avant dudit transducteur électroacoustique (1), respectivement, et
un support annulaire (14) qui es adapté pour s'étendre depuis ladite surface avant dudit transducteur électroacoustique (1) où ladite ouverture avant (12) est disposée, à ladite surface latérale dudit transducteur électroacoustique (1) où ladite ouverture latérale (13) est disposée de sorte à entourer collectivement lesdites ouvertures avant et latérale (12,13), et
ledit pad (14) est adapté pour abuter contre une surface intérieure dudit logement (21) par là formant un espace (16) pour guider un son qui a passé à travers ladite ouverture avant (12), le long de ladite surface intérieure dudit logement (21) à travers ladite ouverture latérale (13) faisant se mélanger le son en un son qui a passé à travers ladite ouverture latérale (13) dans une proximité de ladite ouverture latérale (13) et alors guidant un son qui en résulte à la dite ouverture (20) disposée dans ladite surface latérale (21a) dudit logement.

2. Un dispositif transducteur électroacoustique selon la revendication 1 où
une culasse (4a) constituée d'un circuit magnétique (4) et un cadre (2) qui supporte une périphérie d'un diaphragme (3) configuré par un film fin sont disposés sur un côté arrière dudit transducteur électroacoustique (1),
un écran acoustique (10) configuré par une plaque métallique qui protège ledit diaphragme (3) est disposé sur un côté avant dudit transducteur électroacoustique (1), ladite ouverture avant (12) est disposée dans ledit écran acoustique (10) sur le côté avant dudit diaphragme (3) et
ladite ouverture latérale (13) est disposée dans la surface latérale dudit transducteur électroacoustique (1) entre ledit diaphragme (3) et ledit écran protecteur (10).

3. Un dispositif transducteur électroacoustique selon la revendication 1 ou 2, où un angle de pliage de ladite surface latérale dudit transducteur électroacoustique (1) dans lequel ladite ouverture latérale (13) est disposée, relativement à ladite surface avant plate dudit transducteur électroacoustique (1) dans lequel ladite ouverture avant (12) est disposée est fixée de sorte à former une surface d'inclinaison qui est inférieure à 90 degrés.

4. Un dispositif transducteur électroacoustique selon l'une des revendications 1 à 3 où ledit support (14) est fait d'un matériau de rembourrage.
